# EUROPEAN PATENT SPECIFICATION

(11) **EP 1 666 957 B1**
(45) Date of publication and mention of the grant of the patent: **04.05.2011**
(21) Application number: 05257488.6
(22) Date of filing: 06.12.2005
(51) Int. Cl.: G02F 1/1335, G03F 7/00, G02B 5/20

(54) **Substrate for multiple color filters and method for producing the same**
Substrat für mehrere Farbfilter und Herstellungsverfahren dafür
Substrat pour une pluralité de filtres colorés et son procédé de production

(30) Priority: 06.12.2004 JP 2004353016
(43) Date of publication of application: 07.06.2006
(73) Proprietor: DAI NIPPON PRINTING CO., LTD., Tokyo-to 162-8001 (JP)
(72) Inventor: Takahashi, Tatsumi, c/o Dai Nippon Print Co. Ltd., Tokyo-to 162-8001 (JP)
(74) Representative: Hatt, Anna Louise

(56) References cited:
- EP-A- 0 864 910
- EP-A- 1 193 540
- US-A1- 2003 072 017
- US-B1- 6 245 469

## Description

### BACKGROUND OF THE INVENTION

### Field of the Invention

The present invention relates to a substrate for multiple color filters used in production of a liquid crystal display.

### Description of the Related Art

In a liquid crystal display, a color filter and a liquid crystal driving substrate (counter substrate) are disposed so as to face each other, and a liquid crystal compound is sealed therebetween to form a thin liquid crystal layer. The liquid crystal driving substrate electrically controls the orientation of liquid crystal in the liquid crystal layer to selectively change the intensity of transmitting light or reflecting light at the displaying substrate, whereby display of an image is achieved.

Normally, the above liquid crystal display is produced by forming a substrate for multiple color filters in which a plurality of color filters are arranged in predetermined positions, bonding the substrate with multiple counter substrates made in the same manner as the substrate formultiple color filters, and cutting out individual liquid crystal display parts. The above substrate for multiple color filters is normally composed of a base material, a colored layer formed in a plurality of the pixel regions located in the base material, a transparent electrode layer formed to cover the colored layer, a column portion formed on the transparent electrode layer, a liquid crystal alignment film formed on the transparent electrode layer and the like.

In some cases, upon production of the above substrate for multiple color filters, a manufacturing apparatus may partly come into contact with the transparent electrode layer or with the colored layer formed on the base material in order to support the base material for formation of other members such as the transparent electrode layer and the alignment film, and to convey the substrate for multiple color filters. Thus, there was a problem of this resulting in deterioration of the colored layer or transparent electrode layer brought into contact with the manufacturing apparatus.

US2003/0072017 discloses a multicolour pixel sheet including spacers protruding from light-shielding area.

US6245469 discloses a filter having spacers on non-colour areas.

EP1193540 discloses a colour filter having a black matrix with transparent columnar convex parts formed thereon.

EP864910 discloses a liquid crystal display element substrate having spacers fixed in non-display regions thereof.

### SUMMARY OF THE INVENTION

A high quality substrate for multiple color filters with little defects caused by contact between members or contact with a manufacturing apparatus during production and a method for producing the same is desired.

The present invention provides a substrate for multiple color filters, each color filter being for a liquid crystal display, comprising:
a flexible base material in web form;
a colored layer formed on each of a plurality of pixel regions of the base material, wherein each pixel region defines the area of a color filter to be used as a liquid crystal display region; and
a columnar spacer formed in each pixel region;
characterized in that the substrate further comprises columnportions to prevent the colored layers and columnar spacers from coming into contact with the manufacturing apparatus during production, the column portions being formed on a region outside each pixel region of the base material;
wherein the distance from the surface of the base material to the opposite surface of each column portion is greater than the distance from the surface of the base material to the opposite surface of each columnar spacer.

According to the present invention, since the substrate comprises the column portions, the colored layers or the like are prevented from coming into contact with the manufacturing apparatus during production, so that a high quality substrate for multiple color filters with little defects caused during production is realized. According to the present invention, even when the substrate for multiple color filters is laminated, it is possible to prevent the colored-layers and the like members from coming into contact with other members. This is advantageous in that the substrate for multiple color filters can be stacked for storage.

In the above invention, the base material has flexibility and is in a web form. According to the present invention, due to the provision of the column portion, even though the base material is in a web form, the manufacturing apparatus will not come into contact with members provided on the base material, so that it is possible to provide a high quality substrate for multiple color filters with little defects caused. This enables the substrate for multiple color filters to be stored in a rolled up condition or the like.

In the above invention, it is preferable that each pixel region of the base material has a columnar spacer, and the columnar spacer and that the column portion are formed of the same material. In this case, the columnar spacer and the column portion may be formed at the same time. This makes a substrate for multiple color filters preferable in terms of production efficiency and cost.

In the present invention, a pedestal is preferably formed between the base material and the column portion. In this case, the pedestal permits adjustment in the height of the column portion. For example, when a columnar spacer is formed in a pixel region, the height of the column portion can be made equal to or higher than the height of a columnar spacer by using the pedestal, so that it is possible to prevent the columnar spacer from coming into contact with a manufacturing apparatus and the like.

Also the present invention provides a method for producing a substrate for multiple color filters comprising:
a colored layer forming step wherein a colored layer is formed on each of a plurality of pixel regions of a flexible base material in web form, wherein each pixel region defines the area of a color filter to be used as a liquid crystal display region; and
a column portion forming step wherein column portions are formed by a transfer process outside each pixel region.

According to the present invention, since the column portion is formed by a transfer process, even when the base material has irregularity, for example, it is possible to form a column portion of a prescribed height. Accordingly, a colored layer, for example, is prevented from coming into contact with a manufacturing apparatus such as roller. Thus, a high quality substrate for multiple color filters can be obtained.

According to the present invention, an advantage is achieved that a high quality substrate for multiple color filters with little defects caused during production is obtained, and the substrate for multiple color filters is enabled to be stacked for storage.

### BRIEF DESCRIPTION OF THE DRAWINGS

FIG. 1 is a plan view showing one example of a substrate for multiple color filters of the present invention;
FIG. 2 is an illustrative view for illustrating a substrate for multiple color filters of the present invention;
FIG. 3 is a plan view showing another example ofa substrate for multiple color filters of the present invention; and
FIGS. 4A to 4C is a process chart showing one example of production method of a substrate for multiple color filters of the present invention.

### DETAILED DESCRIPTION OF THE PREFERRED EMBODIMENTS

The present invention relates to a substrate for multiple color filters used in production of a liquid crystal display, and to a method for producing the same.

### A. Substrate for multiple color filters

First, a substrate formultiple color filters of the present invention is explained. A substrate for multiple color filters of the present invention has a base material, a colored layer formed on each of a plurality of pixel regions of the base material, and a column portion formed in a region outside of each pixel region of the base material.

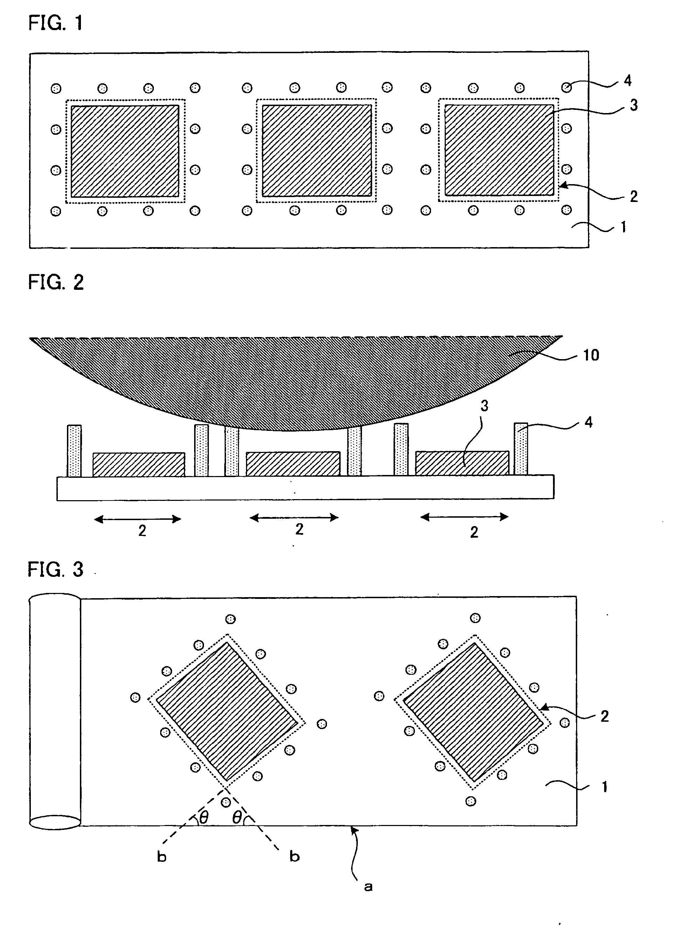

The substrate for multiple color filters of the present invention has a plurality of color filters arranged in predetermined positions, and as shown in, e.g., FIG. 1, has a base material 1, a colored layer 3 formed on each pixel region 2 of the base material 1, a column portion 4 formed in a region outside of the each pixel region 2 of the base material 1. The term "pixel region" used herein refers to a part to be used as a liquid crystal display region when a liquid crystal display is produced using a substrate for multiple color filters. The position on the base material of the pixel regions is not particularly limited, and it may be appropriately selected depending on factors such as the shapes of a manufacturing apparatus and the base material. On each pixel region of the base material of the substrate for multiple color filters, a columnar spacer is normally provided and a light shielding part is formed between each colored layer.

In a conventionally known substrate for multiple color filters, as described, a defect sometimes occurs due to contact between a manufacturing apparatus and a member such as a colored layer formed on a base material during formation of each member on the base material or during conveyance of the substrate for multiple color filters.

On the other hand, according to the present invention, as shown in FIG. 2, for example, since a plurality of column portions 4 are formed in a region outside of the pixel region 2, when the substrate for multiple color filters is conveyed, for instance, the manufacturing apparatus 10 comes into contact with the column portion 4 to prevent the colored layer 3 or the like from coming into contact with the manufacturing apparatus 10.

Therefore, it is possible to realize a high quality substrate for multiple color filters with little defects caused during production. Also an advantage is realized that even when the formed substrates are stacked for storage, members such as the colored layer will not come into contact with a base material or the like since the substrate has the column portion.

Hereafter, the substrate for multiple color filters is explained in each element.

### 1. Column portion

First, a column portion of a substrate for multiple color filters of the present invention will be explained. A column portion of a substrate for multiple color filters of the present invention is not particularly limited as long as it is formed in a region outside each pixel region of the base material as to be described later, and is able to prevent contact with a manufacturing apparatus or the like during production of the substrate for multiple color filters.

The shape of such a column portion is appropriately selected depending on the shape of each pixel region and a kind of the base material as to be described later, and may be a circular cylinder, rectangular cylinder, pyramid, wall or the like. The position at which the column portion is formed is not particularly limited insofar as it is outside the pixel region and able to prevent the colored layer or the like from coming into contact with a manufacturing apparatus or the like. For example, the column portions may be regularly arranged in a region outside of the pixel region, or may be formed at random.

In the present invention, where a columnar spacer is formed within the pixel region, it is preferable that the column portion is formed in a manner wherein the area of upper surface of column portion formed per unit is equal to or larger than the area of upper surface of columnar spacer formed per unit. To be more specific, based on an area of upper surface of column portion per unit as 1, an area of upper surface of columnar spacer per unit is preferably in the range of 0.3 to 1, in particular, in the range of 0.5 to 0.9, specifically preferably in the range of 0.6 to 0.8. As a result of this, the column portion can prevent the columnar spacer from coming into contact with a manufacturing apparatus or the like, or prevent a pressure from being exerted on the columnar spacer. The term "upper surface" used herein refers to a surface opposite to the surface at which the columnar spacer and the column portion contact the base material.

The column portion used in the present invention may be formed in a similar manner to a formation of a columnar spacer in a generally known substrate for multiple color filters. For example, photolithography, a transfer process and the like can be cited. In the present invention, it is particularly preferred that the column portion is formed by a transfer process. This is because the column portion produced by a transfer process can have a constant height even when the base material to be described later has irregularity. The formation of a column portion by a transfer process is explained in the later description "B. Method for producing substrate for multiple color filters", and hence explanation is not repeated here.

The column portion may be formed of a material such as a photosensitive resin composition containing a photosensitive resin, a photo polymerization initiator and a dye or pigment as needed. This may be the same material as that used for forming a columnar spacer of a general substrate for multiple color filters, and may be a material as is described in Japanese Patent Application Laid-Open No. 11-174464, for example. Many of such material are called a pigment-dispersed coloring sensitive material. The column portion may be formed simultaneously with or separately from the columnar spacer. In the present invention, it is particularly preferred that the column portion is formed simultaneously with the columnar spacer using the same material as that of the columnar spacer. This eliminates the necessity of conducting a separate step of forming a column portion, and hence is advantageous in terms of production efficiency and the like.

In the present invention, it is preferred that a pedestal is formed between the column portion and the base material. As described above, it is preferred that the columnar spacer and the column portion are simultaneously formed, however, the columnar spacer is normally formed on a light shielding part formed between colored layers described later. Therefore, when a column portion is formed directly on a base material, the height of the column portion is lower than the height of the columnar spacer, making it difficult for the column portion to prevent the columnar spacer from coming into contact with a manufacturing apparatus or the like. The pedestal is not particularly limited insofar as it is able to adjust the height of the column portion. For example, the pedestal may be formed only in a region where the column portion is formed, or may be formed in a certain pattern in a region outside the pixel region. The pedestal may be formed simultaneously with a light shielding part formed between the colored layers to be described later using the same material with that for the light shielding part, or may be formed simultaneously with a colored layer to be described later using the same material as that for the colored layer. When the light shielding part is formed of metal such as chromium, since the film thickness is generally small, the pedestal is preferably formed simultaneously with a colored layer using the same material as that for the colored layer. When the height from the surface of the base material to the upper surface of the column portion is made higher than the columnar spacer, these layers are preferably stacked. Since such a pedestal may be formed in a manner similar to that for formation of colored layer or light shielding part, detailed explanation thereof is not repeated.

In the present invention, the height from the surface of the base material to the upper surface of the column portion is higher than the columnar spacer, and the height from the surface of the base material to the upper surface of the column portion is specifically about 1 µm to 10 µm, and in particular, about 4 µm to 8 µm.

### 2. Base material

Next, a base material used in the present invention will be described. A base material used in the present invention is not particularly limited insofar as it is able to form the column portion and a colored layer as will be described later, in the present invention, however, a base material in web form having flexibility is used. This is because when such a base material is used, in particular, the surface of a substrate for multiple color filters is liable to come into contact with a manufacturing apparatus when supporting the base material or during conveyance of the base material, and the produced substrate for multiple color filters may be rolled up on a roller for storage. In the present invention, even in the case as described above, since the column portion is formed, it is possible to prevent a member such as a colored layer formed on the base material from coming into direct contact with a manufacturing apparatus. It is also possible to prevent each member from coming into contact with the base material or the like during storage of the substrate for multiple color filters. This makes the most of the advantages of the present invention. ,

The base material may be formed of only a resin, or of combination of a resin and glass fiber or the like. Examples of the resin include synthetic resins such as polyethylene terephthalate, polyethylene naphtalate, polycarbonate, polyphenylenesulfide, polyimide, polyvinyl chloride, polyether sulfone, polyamide-imide, polyamide and aromatic polyamides, and among others, polyethylene terephthalate, polycarbonate or polyether sulfone is preferably used. The base material or the like may be formed of, for example, metal foil. Preferably, the film thickness of the base material is normally from 5 µm to 400 µm, and in particular in the range of approx. 10 µm to 200 µm although it is appropriately selected depending on an application.

In the present invention, where a base material in a web form having flexibility is used as the base material, the pixel region is preferably formed so that an angle θ formed by a lateral side "a" and an extension line "b" of each side constituting the pixel region 2 is 45°±0.5°, as shown in FIG. 3, for example. In this case, preferably the lateral side "a" of the base material 1 in a web form is linearly formed with high accuracy. When a liquid crystal display is manufactured using a substrate for multiple color filters, a polarizing plate is bonded on a face opposite to the face on which the colored layer or the like of the base material is formed. At this time, the angle formed by the direction of polarization of the polarizing plate and each side of the pixel region is adjusted to about 45°. By adopting the above shape of the pixel region, it is possible to readily adjust the angle formed by the direction of polarization of the polarizing plate and each side of the pixel region to that described above by successively bonding the polarizing plate in a web form having a direction of polarization which is parallel or perpendicular to a lateral side. Therefore, it is possible to produce a liquid crystal display with efficiency by using the substrate for multiple color filters of the present invention.

### 3. Colored layer

Next, a colored layer used in the present invention is explained. A colored layer used in the present invention is formed for each pixel region of the base material. Such a colored layer may be a colored layer that is formed in a general substrate for multiple color filters.

Such a colored layer normally has pixels of three colors, red (R), green (G) and blue (B) in one pixel which are arranged in a known configuration such as stripe form, mosaic form, triangle form, or four pixel configuration. The colored layer may include four or more colors of pixels. An area per pixel is appropriately determined depending on the resolution.

Such a colored layer may be produced by a similar method and of a similar material and in a similar area as those used for a colored layer of a general substrate for multiple color filters.

### 4. Substrate for multiple color filters

Next, a substrate for multiple color filters of the present invention is explained. Amulti-face substrate for a color filter of the present invention may have any structure insofar as it has the above base material, column portion, colored layer, and columnar spacer, and may be formed with a light shielding part and the like as described above. In a typical substrate for multiple color filters of the present invention, a transparent electrode layer, protective layer or the like is formed on the colored layer, and an alignment film is formed on the transparent electrode layer, protective layer or the like. In this case, the transparent electrode layer, protective layer or the like is preferably formed after formation of the column portion. Accordingly, the column portion can prevent the transparent electrode layer from coming into contact with a manufacturing apparatus or the like to cause defects, and a high quality substrate for multiple color filters can be obtained. When a transparent electrode layer is formed on the column portion or on the columnar spacer, it is preferred that structure and the like of a counter substrate is adjusted so that the column portion or on the columnar spacer is insulated in manufacturing a liquid crystal display by bonding the substrate formultiple color filters and the counter substrates together.

The above columnar spacer, light shielding part, transparent electrode layer, protective layer, alignment film and the like used in the present invention may be the same as those used in a general substrate for multiple color filters, and hence detailed explanation thereon is not repeated.

### B. Method for producing a substrate for multiple color filters

Next, a method for producing a substrate for multiple color filters of the present invention is explained. A method for producing a substrate for multiple color filters of the present invention includes a column portion forming step in which a column portion is formed by a transfer process in a region outside of each pixel region of a base material in a web form that has flexibility and has colored layers formed on a plurality of pixel regions.

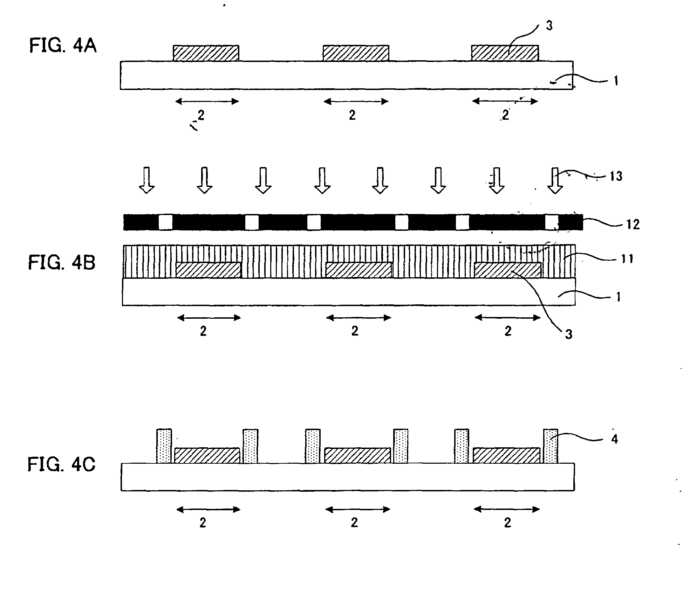

A method for producing a substrate for multiple color filters according to the present invention has a column portion forming step. In the column portion forming step, as shown in FIG. 4, for example, a column portion forming photosensitive film 11 for forming a column portion is brought into close contact with a base material 1 in a web form in which a colored layer 3 is formed on each pixel region 2 (FIG. 4A); energy 13 is applied in the shape of column portion through a photo mask 12 (FIG. 4B), and then the column portion forming photosensitive film 11 is developed to form a column portion 4 in a region outside of the pixel region 2 of the base material 1 (FIG. 4C). Herein, the pixel region refers to a part to be used as a liquid crystal display area when a liquid crystal display is produced using the substrate for multiple color filters.

According to the present invention, since the column portion is formed by a transfer process, even when the base material has irregularity, it is possible to form the column portion while making the column portion forming photosensitive film for forming the column portion follow the irregularity, and hence to obtain a substrate for multiple color filters having column portions of a constant height. As a result, it is possible to prevent the colored layer, transparent electrode layer or the like from coming into contact with a manufacturing apparatus to cause a defect during formation of the transparent electrode layer on the colored layer or formation of an alignment film. Even when the formed substrate for multiple color filters is wound around a roller, the column portion can prevent the members such as colored layer from coming into contact with base material. Thus, the substrate for multiple color filters can be stored in a rolled state. Hereinafter, a method for producing a substrate for multiple color filters of the present invention will be explained in detail.

### 1. Column portion forming step

First, a column portion forming step of the present invention is explained. A column portion forming step of the present invention is a step of forming a column portion by a transfer process in a region outside of each pixel region of a base material in a web form with flexibility having colored layers formed on a plurality of pixel regions.

Formation of column portion by the transfer process may be conducted, for example, in the following manner. First, a column portion forming photosensitive film is prepared in which a photosensitive resin layer containing a photosensitive resin is formed on a resin film, and the photosensitive resin layer is bonded with the base material on which the colored layers are formed. Bonding with the column portion forming photosensitive film is normally conducted while heating and softening the photosensitive resin layer with a heatable roll generally called a hot roll, a heating jacket called a heat shoe, and a roll called a laminate roll. At this time, the base material may be heated as needed.

Then the photosensitive resin layer is exposed to light in a pattern of an objective column portion, and the above resin film is peeled off, followed by development with a developing agent. The light exposure may be conducted in the condition that the resin film is peeled off. The development may be followed by a post baking step to heat if necessary. The above exposure and development may be conducted in similar manners to those for exposure and development of a general photosensitive resin.

The above photosensitive resin layer may be a layer containing, for example, a photosensitive resin, photo polymerization initiator, and a dye, pigment or the like as needed. As such a material, materials used for formation of a columnar spacer in a general substrate for multiple color filters may be recited, and may be those described in the item "A. Substrate for multiple color filters."

In the present invention, it is preferred to form a columnar spacer in the pixel region simultaneously with formation of the column portion. This eliminates the necessity of conducting a columnar spacer forming step separately, and permits production of a substrate for multiple color filters with high production efficiency.

As to the base material in a web form, colored layer and the like used in the present step, those as described in the item "A. Substrate for multiple color filters" may be used. The shape and position of the column portion formed in the present step may be those as described in the item "A. Substrate for multiple color filters", and hence detailed explanation thereon is not repeated here.

### 2. Others

In a method for producing a substrate for multiple color filters according to the present invention, besides the above column portion forming step, for example, a colored layer forming step for forming a colored layer on a base material, a transparent electrode layer forming step for forming a transparent electrode layer on the colored layer, an alignment film forming step for forming an alignment film, and the like may be included. These steps may be conducted in similar manners as those employed in production of a general substrate for multiple color filters, and hence detailed explanation thereon is not repeated here.

In the present invention, the transparent electrode layer forming step and the alignment film forming step are preferably conducted after the column portion forming step. This prevents the formed transparent electrode layer, alignment film or the like from coming into contact with a manufacturing apparatus owing to the column portion, and making it possible to produce a high quality substrate for multiple color filters with little defects caused.

The present invention is not limited to the embodiments as described above. The above embodiments are given for exemplification.

### EXAMPLES

The present invention will now be described in more detail by way of Examples.

### <<Examples>>

### [Base material and base film]

A polyester (PET) film having a thickness of 120 µm and a width of 300 mm manufactured by TOYOBO., LTD. was prepared as a base film that is a base material. No surface treatment or the like was conducted in advance.

### [Photo mask]

The following photo mask was prepared.

A photo mask was produced by sputtering chromium metal on one side of a flat and smooth quartz glass substrate of 330 mm x 450mm in size and 5 mm in thickness, and on each side of the photo mask, two color filter patterns designed to have a diagonal of 4 inches and a resolution of 200 ppi were imposed. At this time, these color filter patterns were disposed in the center of TD direction of the respective photo masks so that they are arranged in equal intervals along the MD direction.

Based on this arrangement, photo masks with respective predetermined pattern: the one for light shielding part, the one for each color of RGB (for colored layer), and the one for columnar spacer, were prepared.

As to a photo mask for light shielding part, in addition to a pattern for light shielding part, a pattern for pedestal was formed in a region inside a 200mm x 200mm area which is to be exposed by an exposing device and defines outer circumference of a pixel region. A pedestal produced from this pattern for pedestal functions as a pedestal of column portion formed by using a photo mask for columnar spacer.

Also in a photo mask for columnar spacer, a pattern for column portion was formed in a position similar to that of the pattern for pedestal formed in the photo mask for light shielding part. The pattern for pedestal formed in the photo mask for light shielding part was 10 µm in diameter, and the pattern for column portion formed in the photo mask for columnar spacer was 8 µm in diameter.

### <Formation of light shielding part>

### (Application of light shielding part forming composition)

On the above PET film serving as a base material, a light shielding part forming composition having a composition provided below was applied by using a dye coater so that the thickness was 10 µm in wet state. After drying, pre-baking was conducted at a temperature of 90°C for 2 minutes, a roll having a 2 µm-thick coating film of light shielding part forming composition was obtained. The coater used had a plasma processing device in a film winding out part, by which normal plasma surface treatment was conducted directly before application.

### [Composition of light shielding part forming composition]

- Benzyl methacrylate /methacrylic acid copolymer (molar ratio: 73/27) 135 parts
- Dipentaerythritol hexaacrylate 72 parts
- Carbon black dispersion 135 parts
- Photo polymerization
   initiator(2-benzyl-2-dimethylamino-1-(4-morpholinophenyl)b utanone-1) 2.3 parts
- Propyleneglycol(monomethyl)ether acetate 540 parts
* These "parts" are shown by mass.

### (Exposing step)

The roll having a coating film obtained above was passed through an exposure apparatus equipped with a unwinding device at an upstream side and a winding device at a downstream side, and the successive roll was conveyed by driving a pair of nip rollers provided inlet and outlet sides of the exposure apparatus. In this conveying condition, the tension exerted on the roll was 2 kg/300 mm width.

The body temperature of the exposure apparatus was adjusted to 21°C±0.1°C and the relative humidity was adjusted to 60%±1%.

After fixing the roll having a coating film on an exposure table by adsorption, an interval (gap) between the surface of the coating film of the roll and the photo mask for light shielding part was automatically adjusted to 95 µm. As to the position at which the roll is exposed, the exposing apparatus automatically detects the distance from an end surface of the roll and automatically adjusts a position of the pattern of the photo mask. As a light source, a high-pressure mercury lamp was used, and I ray (wavelength: 365 nm) was exposed to an exposure area of 200 mm x 200 mm at a illumination intensity of 15 mw/cm² for 20 seconds so that the light exposure was 300 mJ/cm². The film was fed at a pitch of 300 mm.

### (Development and post baking step)

Development was conducted by a developing apparatus provided on a downstream side of the exposing apparatus. The roll after exposure was developed while conveyed at a constant speed of 400 mm/min, to give a film in which predetermined patterns of light shielding part and pedestal are formed on the PET film.

Then post baking process was conducted at 150°C for 30 minutes in a baking furnace to thermally cure the light shielding part and the pedestal.

### <Formation of colored layer>

### (Formation of transfer dry film for colored layer formation)

On a polyester film (substrate film) having a thickness of 40 µm and a width of 300 mm manufactured by TOYOBO., LTD., a previously prepared colored layer forming composition having the following composition was applied so that the thickness thereof was 10 µm in wet state using a dye coater. After drying, pre-baking was conducted at 90°C for 2 minutes, to give a transfer dry film for colored layer formation having a thickness of 2 µm.

### [Composition of (Red) colored layer forming composition]

- Photosensitive polymer
   Copolymer composed of methyl methacrylate, acrylonitrile and acrylated glycidyl acrylic acid ester at a molar ratio of 65: 10:25 1196 parts
- Base polymer
   Copolymer composed of methyl methacrylate and β-hydroxyethyl methacrylic acid ester at a molar ratio of 90:10 557 parts
- Plasticizer
   Triethyleneglycoldiacetic acid ester 262 parts
- Initiator
   Tertiary butyl anthraquinone 142 parts
- Heat polymerization preventor
   2,2'-methylene-bis-(4-ethyl-6-tertiary butyl phenol) 34.5 parts
- Pigment
   Balcan Fast red B (Hoechst AG) 300 parts
- Methylethyl ketone 1000 parts
* These "parts" are shown by mass.

### (Exposing step)

The above PET film on which the light shielding part and the pedestal are formed and the transfer dry film for formation of colored layer produced in the above specification were piled so that the face of the light shielding part and the face of the colored layer forming composition were inside, to give a laminated roll. This laminated roll was passed through the exposing apparatus equipped with a unwinding device at an upstream side and a winding device at a downstream side, and the successive laminated roll was conveyed by driving a pair of nip rollers provided inlet and outlet sides of the exposure apparatus. In this conveying condition, the tension exerted on the laminated roll was 2 kg/300 mm width.

The body temperature of the exposure apparatus was adjusted to 21°C±0.1°C and the relative humidity was adjusted to 60%±1%.

After fixing the laminated roll having a coating film on an exposure table by adsorption, an interval (gap) between the surface of the substrate filmof the transfer dry film for formation of colored layer and the photo mask for colored layer (RED) was automatically adjusted to 95 µm. As to the position at which the laminated roll is exposed, the exposing apparatus automatically detects the distance from an end surface of the laminated roll and automatically adj usts a position of the pattern of the photo mask. At this time, exposure was conducted in alignment with the photo mask using an alignment mark formed simultaneously with the formation of the light shielding part. As a light source, a high-pressure mercury lamp was used, and I ray (wavelength: 365 nm) was exposed to an exposure area of 200 mm × 200 mm at a illumination intensity of 15 mw/cm² for 20 seconds so that the light exposure was 100 mJ/cm².

### (Development and post baking step)

Development was conducted by a developing apparatus provided on a downstream side of the exposing apparatus. The laminated roll after exposure was conveyed at a constant speed of 400 mm/min, and development was conducted by peeling off only the substrate film of the transfer dry film for formation of colored layer directly before the developing apparatus. As a result, a film in which a red color layer is formed at a predetermined position of an opening of the light shielding part was obtained. Then post baking process was conducted at 150°C for 30 minutes in a baking furnace to thermally cure the red colored layer.

A green colored layer and a blue colored layer were formed in the same manner as for formation of the red colored layer, to give a film roll in which the light shielding part and the RGB colored layers are formed on the PET film. In formation of the green colored layer, 350 parts of Heliogen Green (Hoechst AG) was used as a pigment, and in formation of the blue colored layer, 200 parts of Indanthrene Blue BC (BASF Japan) was used as a pigment for preparing the respective colored layer forming composition.

### <Formation of columnar spacer and column portion>

In order to form a columnar spacer and a column portion, a clear composition for formation of columnar spacer was prepared from which the pigment component was excluded from the colored layer forming composition, and a transfer dry film for formation of columnar spacer was produced in a condition similar to that for formation of the above transfer dry film for formation of colored layer. Then using a photo mask for columnar spacer, a columnar spacer and a column portion were formed in a condition similar to that for formation of the colored layer. The columnar spacer was provided at every crossing point of the light shielding part in a pixel region. On outer circumference of the pixel region, a column portion was formed at a pitch similar to that of the columnar spacer.

Observation of the obtained color filter with a columnar spacer by a dimension measuring machine (NEXIVVMR-6555 available from Nikon Corporation) at a temperature of 23°C±0.1°C and a relative humidity of 60%±1% revealed that a clear column portion was formed on the pedestal similar to that of the light shielding part having a diameter of 10 µm at accuracy of ±0.5 µ.

Finally, the color filter with a columnar spacer was cured in an oven at 140°C for 24 hours.

### <Evaluation>

Using the color filter with a columnar spacer, ITO film formation test was conducted using a continuous sputtering apparatus, to demonstrate that an ITO film was formed in a normal condition. In the above test apparatus, there were at least eight rolls, and every surface of the color filter with a columnar spacer, namely, every surface on which the colored layer or the like was formed was brought into contact with the conveying rolls.

Microscopic observation of the color filter with a columnar spacer on which the ITO film was formed demonstrated that no scratches and defects were found on the surface of the color filter double-imposed at a feed of 300 mm.

## Claims

1. A substrate for multiple colour filers, each colour filter being for a liquid crystal display, comprising:
a flexible base material in web form (1);
a coloured layer (3) formed on each of a plurality of pixel regions (2) of the base material (1), wherein each pixel region (2) defines the area of a colour filter to be used as a liquid crystal display region; and
a columnar spacer formed in each pixel region (2);
**characterised in that** the substrate further comprises column portions (4) to prevent the coloured layers (3) and columnar spacers from coming into contact with the manufacturing apparatus during production, the column portions (4) being formed on a region outside each pixel region (2) of the base material (1);
wherein the distance from the surface of the base material (1) to the opposite surface of each column portion (4) is greater than the distance from the surface of the base material (1) to the opposite surface of each columnar spacer.

2. A substrate as claimed in Claim 1, wherein the columnar spacers and the column portions (4) are formed of the same material.

3. A substrate as claimed in Claim 1, wherein a pedestal for adjusting the distance from the surface of the base material (1) to the opposite surface of the column portion (4) is formed between the base material (1) and the column portion (4).

4. A method for producing a substrate for multiple colour filters as claimed in Claim 1, comprising:
a coloured layer forming step wherein a coloured layer (3) is formed on each of a plurality of pixel regions (2) of a flexible base material in web form (1), wherein each pixel region (2) defines the area of a colour filter to be used as a liquid crystal display region; and
a column portion (4) forming step wherein column portions (4) are formed by a transfer process outside each pixel region (2).

## Patentansprüche

1. Substrat für mehrere Farbfilter, die jeweils für eine Flüssigkristallanzeige bestimmt sind, umfassend:
ein flexibles Basismaterial in Form einer Matrix (1);
eine jeweils auf einer Vielzahl von Pixelbereichen (2) auf dem Basismaterial (1) ausgebildete Farbschicht (3), wobei durch jeden Pixelbereich (2) die als Flüssigkristallanzeigebereich zu verwendende Fläche eines Farbfilters festgelegt ist; und
einen in jedem Pixelbereich (2) ausgebildeten säulenförmigen Abstandshalter;
**dadurch gekennzeichnet, dass** das Substrat weiterhin umfasst:
Säulenabschnitte (4), um zu verhindern, dass die Farbschichten (3) und die säulenförmigen Abstandshalter während der Produktion mit dem Herstellungsgerät in Verbindung gelangen, wobei die Säulenabschnitte (4) auf einem Bereich jeweils außerhalb des Pixelbereichs (2) des Basismaterials (1) ausgebildet sind;
wobei der Abstand von der Fläche des Basismaterials (1) zur gegenüberliegenden Fläche jedes Säulenabschnitts (4) größer ist als der Abstand von der Fläche des Basismaterials (1) zur gegenüberliegenden Fläche jedes säulenförmigen Abstandshalters.

2. Substrat nach Anspruch 1, wobei die säulenförmigen Abstandshalter und die Säulenabschnitte (4) aus demselben Material ausgebildet sind.

3. Substrat nach Anspruch 1, wobei ein Sockel zur Abstandsregulierung der Fläche des Basismaterials (1) im Hinblick auf die gegenüberliegende Fläche des Säulenabschnitts (4) zwischen dem Basismaterial (1) und dem Säulenabschnitt (4) ausgebildet ist.

4. Verfahren zum Herstellen eines Substrats für mehrere Farbfilter nach Anspruch 1, umfassend:
den Schritt des Ausbildens einer Farbschicht, wobei eine Farbschicht (3) jeweils auf einer Vielzahl von Pixelbereichen (2) eines flexiblen Basismaterials in Form einer Matrix (1) ausgebildet wird;
wobei durch jeden Pixelbereich (2) die als Flüssigkristallanzeigebereich zu verwendende Fläche eines Farbfilters festgelegt ist; und
den Schritt des Bildens eines Säulenabschnitts (4), wobei Säulenabschnitte (4) durch einen Transfervorgang außerhalb jedes Pixelbereichs (2) ausgebildet werden.

## Revendications

1. Substrat pour des filtres colorés multiples, chaque filtre coloré étant destiné à un écran à cristaux liquides, comprenant :
un matériau de base flexible en forme de toile (1) ;
une couche colorée (3) formée sur chacune d'une pluralité de zones de pixels (2) du matériau de base (1), dans laquelle chaque zone de pixel (2) définit la zone d'un filtre coloré à utiliser comme une zone de l'écran à cristaux liquides, et
une entretoise en colonne, formée dans chaque zone de pixel (2) ; **caractérisé en ce que** le substrat comprend en outre des parties de colonne (4) pour empêcher les couches colorées (3) et les entretoises en colonne d'entrer en contact avec l'appareil de fabrication pendant la production, les parties de colonne (4) étant formées sur une zone située à l'extérieur de chaque zone de pixel (2) du matériau de base (1) ;
dans lequel la distance entre la surface du matériau de base (1) et la surface opposée de chaque partie de colonne (4) est supérieure à la distance entre la surface du matériau de base (1) et la surface opposée de chaque entretoise à colonnes.

2. Substrat selon la revendication 1, dans lequel les entretoises à colonnes et les parties de colonne (4) sont formées dans le même matériau.

3. Substrat selon la revendication 1, dans lequel un socle permettant d'ajuster la distance entre la surface du matériau de base (1) et la surface opposée de la partie de colonne (4) est formé entre le matériau de base (1) et la partie de colonne (4).

4. Procédé de production d'un substrat pour de multiples filtres colorés selon la revendication 1, comprenant :
une étape de formation d'une couche colorée, dans laquelle une couche colorée (3) est formée sur chacune d'une pluralité de zones de pixel (2) d'un matériau de base flexible en forme de toile (1), dans laquelle chaque zone de pixel (2) définit la zone d'un filtre coloré à utiliser comme une zone de l'écran à cristaux liquides, et
une étape de formation d'une partie de colonne (4), dans laquelle les parties de colonne (4) sont formées par un procédé de transfert hors de chaque zone de pixel (2).
